# EUROPEAN PATENT APPLICATION

(11) **EP 4 507 185 A1**
(43) Date of publication of application: **12.02.2025**
(21) Application number: 23784204.2
(22) Date of filing: 29.03.2023
(51) Int. Cl.: H02N 15/00

(54) **SELF-LEVITATING BODY AND MAGNETIC LEVITATING DEVICE**

(30) Priority: 07.04.2022 CN 202210364306; 17.10.2022 CN 202222728368 U
(71) Applicant: HENG YI TECHNOLOGY COMPANY LIMITED, Zhaoqing, Guangdong 526238 (CN)
(72) Inventor: ZHANG, Yufei, Xuchang, Henan 461506 (CN); WANG, Xiaobing, Zhaoqing, Guangdong 526238 (CN); LI, Liangqing, Zhaoqing, Guangdong 526238 (CN)
(74) Representative: Dantz, Jan Henning
(86) International application number: PCT/CN2023/084547
(87) International publication number: WO 2023/193640

(57) **Abstract**

A self-levitating object and a magnetic levitation device. The levitating object comprises a housing and a magnetic member, wherein the housing and the magnetic member are configured to be relatively movable, and the relative movement between the magnetic member and the housing are guided by means of a linear guide mechanism provided in the levitating object. According to the present invention, a magnetic member capable of linearly moving or vertically moving is provided in the levitating object, so that self-lifting and lowering levitation or landing of the levitating object relative to a levitator base can be easily achieved without providing a lifting and lowering mechanism in the levitator base. In this way, an extremely strong visual special effect and a sense of magic are achieved, and the levitator base can still maintain an original compact or miniaturized flat structure.

## Description

### Field of the Disclosure

The invention relates to a magnetic levitation device.

### Background of the Disclosure

Known magnetic levitation device usually includes a levitator in the form of a base or a hanger and a levitating object in various suitable forms such as a globe, a Bluetooth speaker, a moon lamp, a flowerpot, a knickknack, etc. The levitation/landing of the levitating object relative to the levitator can be performed manually or automatically. CN112228734A, CN112087163A, CN110748563A, CN102315805A, CN102570927A, CN207202600U, etc., each disclose provision of a lift mechanism in the levitator base to realize automatic levitation/landing of the levitating object. Providing such lift mechanisms within the levitator base has to be subjected to constraints in view both of space and cost.

### Summary of the Disclosure

The object of the present invention is to provide a magnetic levitation device that can realize the automatic levitation or landing of a levitating body in a simpler manner.

According to a first aspect of the present invention, a levitating object for a magnetic levitation device is provided with a housing and a magnetic member, wherein the housing and the magnetic member are configured to be relatively movable, and the relative movement of the magnetic member to the housing is guided by a linear guide mechanism provided in the levitating object.

According to the levitating object of the present invention, the linear guide mechanism may be formed on the housing and/or the magnetic member.

According to the levitating object of the present invention, the housing is preferably a closed or substantially closed housing, more preferably a sphere or a box, such as a transparent or opaque sphere.

According to the levitating object of the present invention, the magnetic member preferably always moves within the housing. Of course, the magnetic member can also extend, such as upward and/or downward, out of the housing. **In** the case of downward extending out of the housing, the magnetic member can be used, for example, as a hidden display shelf, while the levitating object can be used as a storage box.

The levitating object according to the present invention may further comprise a motor providing driving force for the relative movement of the magnetic member to the housing. In this case, usually it may further comprise a transmission mechanism that transmits the driving force of the motor to the magnetic member or to the housing.

The levitating object according to the present invention may also comprise a limiting mechanism for limiting the upper and/or lower movement limit of the relative movement of the magnetic member to the housing.

According to the levitating object of the present invention, the linear guide mechanism of the housing is preferably a straight tube in which the magnetic member is provided.

In the case of a straight tube guide, the magnetic member and the straight tube may preferably form a piston-cylinder type vacuuming mechanism. Alternatively, the straight tube may be formed with a (upper or lower) stop, and a compression spring is provided between the stop and the magnetic member. Therefore, the motor may be omitted in this case to achieve automatic lifting and lowering of the levitating object.

Of course, other linear guide mechanisms such as a screw may be used to engage with a nut provided on the magnetic members, or vice versa.

According to the levitating object of the present invention, the housing may further be provided with a positioning mark indicative of the linear motion direction of the linear motion mechanism or of the corresponding position of the magnetic member.

In addition, the levitating object may also be provided with electrical devices such as sound or lighting devices, wireless or wired charging devices, etc.

According to a second aspect of the present invention, a magnetic levitation device is also provided, which includes a levitator and the above-mentioned levitating object, wherein the levitating object is suspensible through the levitator.

According to the magnetic levitation device of the present invention, the levitator may be in the form of a base, and the levitating object can be suspended above the base. In this case, the upper surface of the base is preferably provided with a positioning center point, and when the base is oriented horizontally, the magnetic member of the levitating object can be suspended directly above the positioning center point.

According to the magnetic levitation device of the present invention, the levitator may alternatively be in the form of a hanger, and the levitating object can be suspended below the highest point of the hanger.

According to the magnetic levitation device of the present invention, the levitator base may also be designed as a calendar base which is provided with at least one indicator runner and at least one indicator bead operatively movably positioned in the at least one indicator runner. The at least one indicator runner may include two annular indicator runners radially spaced apart from each other, one of which is formed with date marks, and the other is formed with weekly-date marks or month marks, and each of which is provided with a corresponding indicator bead. In addition, the levitating object may be a spherical moon-phase lamp that can light up in one half and remain relatively dim in the other half.

According to a third aspect of the present invention, a method of raising and lowering a levitating object using the above-mentioned magnetic levitation device is provided, which comprises:
placing the levitator base basically horizontally;
placing the levitating object on the levitator base, and align the magnetic member of the levitating object with the positioning center point of the levitator base along the direction of the linear guide mechanism;
moving the magnetic member along the direction of the linear guide mechanism to the set suspension height so that it is in a stable suspension state relative to the levitator base; and
moving the housing of the levitating object, relative to the magnetic member, upward and thus away from the levitator base till to a desired height.

The method according to the invention may further comprise: moving the housing of the levitating object, relative to the magnetic member, downward till to a desired height or in contact with the levitator base.

According to the method of the invention, the relative movement of the housing of the levitating object to the magnetic member may be performed by an electric drive mechanism. For example, a motor and a transmission mechanism may be provided in the levitating object to control the relative movement of the two.

According to the method of the present invention, the relative movement of the housing of the levitating object to the magnetic member may be performed by a resilient restoration mechanism or by manual restoration mechanism. Such a method omits the use of a motor, simplifies the device structure and further reduces costs.

According to the method of the present invention, the resilient restoration mechanism may be a piston-cylinder type vacuuming mechanism and/or a spring mechanism.

The method according to the present invention may further comprise: providing the levitator base and the levitating object respectively with positioning engaging features by aid of which the magnetic member of the levitating object is enabled to be aligned with the positioning center point of the levitator base in the direction of the linear motion mechanism when the levitating object is placed on the levitator base.

According to the present invention, simply with a magnetic member linearly or vertically movably provided therein, the levitating object can of itself rise for suspension from, or fall for landing to, the levitator base in which no lift is needed. This results in extremely strong visual effects as well as a sense of magic, and at the same time enables the levitator base to be kept as usual in a compact or small flat structure.

### Description of Drawing Figures

Figures 1-3 are illustrative views of a levitating object and a magnetic levitation device using same according to a first embodiment of the present invention;
Figures 4-6 are illustrative views of a levitating object and a magnetic levitation device using same according to a second embodiment of the present invention;
Figures 7 and 8 are illustrative views showing a modification of the transmission mechanism of the levitating object according to the second embodiment of the present invention;
Figures 9 and 10 are illustrative views showing another modification of the transmission mechanism of the levitating object according to the second embodiment of the present invention;
Figure 11 is a perspective view of a calendar base according to the present invention;
Figures 12 and 13 are illustrative views of a magnetic levitation device with a calendar base according to the present invention;
Figure 14 is an illustrative view of a magnetic levitation device with a spherical moon-phase lamp and a calendar base according to another embodiment of the present invention;
Figure 15 is an illustrative view of a magnetic levitation device with a spherical moon-phase lamp and a calendar base according to yet another different embodiment of the present invention;
Figure 16 is a top view of the calendar base shown in Figure 15; and
Figure 17 is a front view of the calendar base shown in Figure 16.

### Description of Embodiments

The present invention will be further described below with reference to the embodiments and drawing figures. Those skilled in the art should appreciate that the embodiments and drawing figures are only for a better understanding of the present invention, not for any limitation. For example, although the levitating object described in the following embodiments is used with a magnetic repulsion base levitator, it can also be applied to a hanger levitator or a magnetic levitation device of a magnetic attraction type.

The magnetic levitation device of the present invention generally includes a levitator (or may also be called a "magnetic levitation supporting mechanism") and a levitating object (or "object to be levitated") which can be stably levitated or suspended in the air through the levitator. The specific structures and working principles of such magnetic levitation devices are well-known in the art, and for the sake of brevity, no detailed description thereof is given here. See, for example, CN100544183C, CN105790641B, CN112086312A, and US7505243B2, all of which are herein incorporated in their entireties by reference. The levitator is usually in the form of a base or a hanger including a magnetic assembly (such as a permanent ring magnet) sensors (such as Hall sensors), control elements such as electromagnetic coils, etc. And the levitating object is provided with magnetic members such as cylindrical permanent magnets.

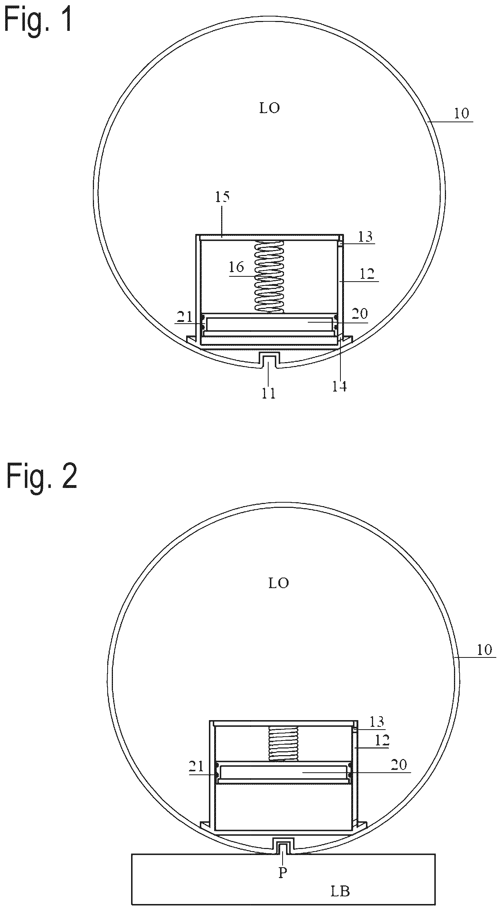

Figure 1 shows a schematic cross-sectional structural view of a levitating object LO according to the first embodiment of the present invention. The levitating object LO includes a spherical housing 10 at the bottom of which a positioning recess 11 is optionally provided. A vertical guide tube 12 is fixedly disposed inside the housing 10. The central symmetry axis of the guide tube 12 is vertically aligned with the positioning recess 11. The upper and lower portions of the guide tube 12 are optionally provided with vent holes 13 and 14.

The cylindrical magnetic member 20 is disposed in the guide tube 12 and optionally forms a tight-fit relationship with the inner wall of the guide tube 12 through a seal ring 21 located on its outer circumferential wall. The compression spring 15 is optionally provided between the magnetic member 20 and the top cover 15 of the guide tube 12.

Figure 2 shows in a schematic cross-sectional view a levitating object LO placed on a levitator in the form of a base LB. As shown in the figure, the upper surface of the base LB is optionally provided with a positioning protrusion P which is inserted into the positioning recess 11 of the levitating object LO so as to result in an initial positioning.

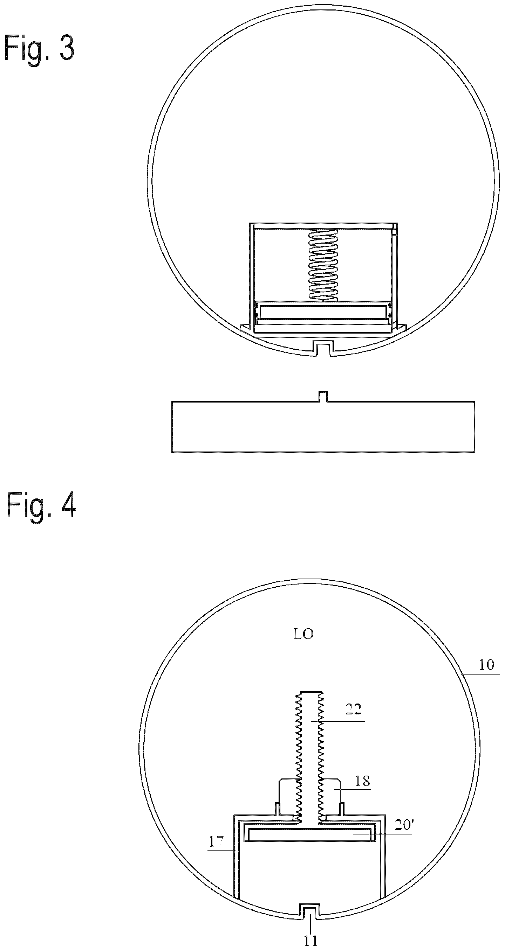

As shown in Figure 2 , when the levitating object LO is placed on the base LB, due to the repulsion force generated by the magnetic assembly such as a ring magnet (not shown) in the base LB on the magnetic member 20 in the levitating object LO, the magnetic member 20 automatically rises from the bottom of the guide tube 12 shown in Figure 1 to the set suspension height (which depends on the specific settings of the device itself) shown in Figure 2 and is stably suspended at this equilibrium position. Due to the vacuuming effect of the magnetic member 20 functioning as a piston with the seal ring 21, the space below the magnetic member 20 in the guide tube 12 results in an approximate vacuum when, for example, the lower vent hole 14 and even the top cover 15 of the guide tube 12 as well as the spring 15 are dispensed with. Next, the housing 10 of the levitating object LO will automatically rise due to the vacuum effect until the bottom of the guide tube 12 is substantially in contact with the magnetic member 20, as shown in Figure 3. In addition, due to the vacuum damping effect, the levitating object LO will gradually rise from the base LB while resulting in a great visual effect.

In Figure 2, the top cover 15, spring 16, upper and lower vent holes 13 and 14, and optionally the seal ring 21, can all remain untouched. In such a case, due to the action of the pressure exerted by the spring 16 on the top cover 15, the housing 10 of the levitating object LO will still automatically rise to the position shown in Figure 3.

Of course, it will be appreciated by those skilled in the art that as relative restoration mechanism of the housing 10 to the magnetic member 20, the above-mentioned vacuuming piston and the pressure spring can be used in combination. In addition, other suitable resilient restoration mechanism can also be used. In addition, the restoration can also be manually performed without using any resilient restoration mechanism. For example, resilient snap-in engaging features can be provided on the guide tube functioning as a linear guide mechanism and on the magnetic member 20 respectively, and thus the engagement and disengagement therebetween can be realized by external force (such as pressing-down on the housing 10). In addition, other suitable linear guide mechanisms, such as in the form of a guide rod, etc., than in the form of a guide tube, can also be used.

Figure 4 shows a schematically structural cross-sectional view of the levitating object LO according to the second embodiment of the present invention. The levitating object LO includes a spherical housing 10 at the bottom of which a positioning recess 11 is optionally provided. A cylindrical support 17 is fixedly disposed inside the housing 10, and a motor 18 with a hollow threaded rotating shaft is fixedly mounted on the support 17. The motor 18 is fixed on the support 17 by its housing, with its hollow threaded rotating shaft being oriented vertically and aligned vertically with the positioning recess 11.

Inside the support 17 is arranged a cylindrical magnetic member 20' to which a threaded column 22 is fixedly mounted. The threaded column 22 extends upward from the support 17 and passes through the hollow threaded rotating shaft of the motor 18 in a thread-fit manner.

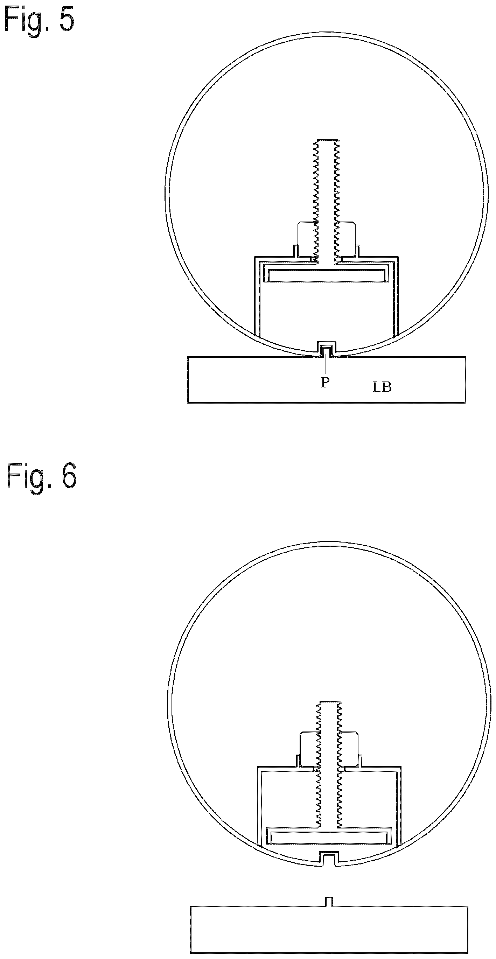

Figure 5 shows in a cross-sectional schematic view a levitating object LO placed on a base LB functioning as a levitator. As shown, the upper surface of the base LB is optionally provided with a positioning protrusion P which is inserted into the positioning recess 11 of the levitating object LO so as to result in an initial positioning.

As shown in Figure 6, when the levitating object LO is placed on the base LB, the magnetic member 20' in the levitating object LO will be positioned at a set suspension height by the initial setting or by the driving of the motor 18, and will thus be stably suspended in this equilibrium position by aid of the repulsion force exerted thereon by the magnetic assembly such as a ring magnet (not shown) in the base LB. Next, the hollow threaded rotating shaft of the motor 18 is driven to rotate, for example, through a remote switch (not shown) provided on the base LB or a remote control, so that the motor 18 rotates the housing 10 of the levitating object LO to rise away from the base LB upward along the threaded column 22 on the magnetic member 20', until the bottom of the housing 10 is in close relationship with the magnetic member 20', as shown in Figure 6. The motor 18 can then be controlled to rotate reversely so as to lower the housing 10 to a desired height or to the initial landing position as shown in Figure 5. In addition, due to the rotary lifting movement of the housing 10, the levitating object LO can rotate horizontally when rising from the base, resulting in a unique visual effect.

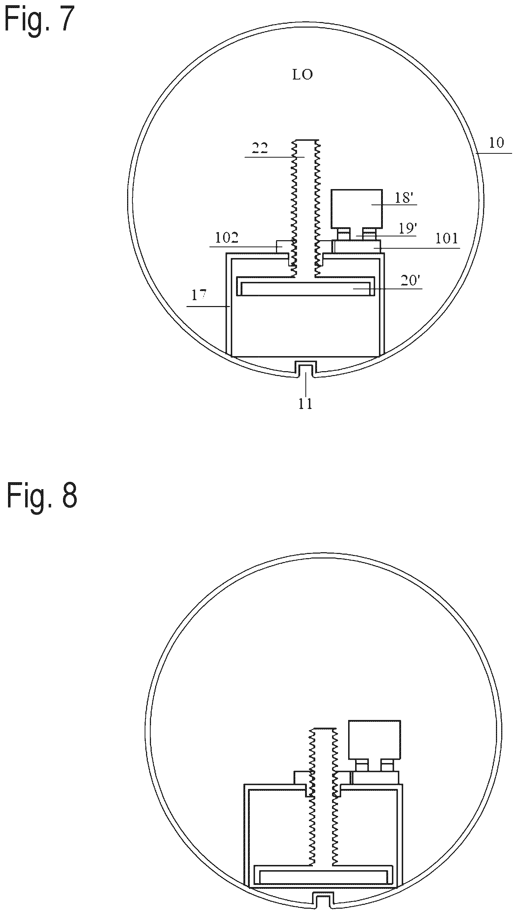

Figure 7 is a schematic view of a modification of the levitating object according to the second embodiment of the present invention, which is similar to the embodiment shown in Figure 4 except for a different transmission mechanism.

As shown in Figure 7, the motor 18' fixed on the support 17 is an ordinary motor with a rotating shaft 19' extending vertically downward. The housing of the motor 18' is still fixed on the support 17, but is offset from and parallel to the threaded column 22 of the magnetic member 20'. The rotating shaft 19' is fixed with a gear 101, the gear 101 is meshed with a transmission mechanism gear 102, and the transmission mechanism gear 102 in turn forms a thread-fit connection with the threaded column 22 of the magnetic member 20' passing therethrough. In this case, the motor 18' can also drive the housing 10 of the levitating object LO to rise and fall automatically, as shown in Figure 8.

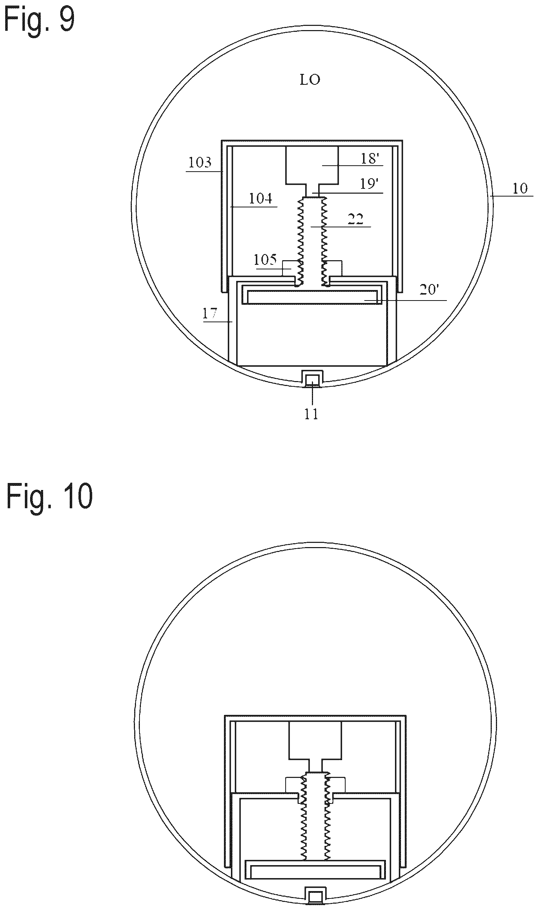

Figure 9 is a schematic view of a modification of the levitating object according to the second embodiment of the present invention, which is similar to the embodiments shown in Figures 4 and 7 except for a different transmission mechanism.

As shown in Figure 9, the cylindrical support 17 is covered with an outer cylinder 103 that can slide up and down along the former. The outer cylinder 103 is further provided with guide ribs 104 so that the outer cylinder 103 can only move up and down, without rotation, relative to the cylindrical support 17. The motor 18' fixed on the outer cylinder 103 is also an ordinary motor, with a rotating shaft 19' extending vertically downward. The rotating shaft 19' is aligned vertically with the threaded column 22 of the magnetic member 20' and fixed thereto. A nut 105 is fixed on the top of the cylindrical support 17 and forms a thread-fit connection with the threaded column 22 of the magnetic member 20' passing therethrough. In this case, the motor 18' can also drive the housing 10 of the levitating object LO to rise and fall automatically, as shown in Figure 10.

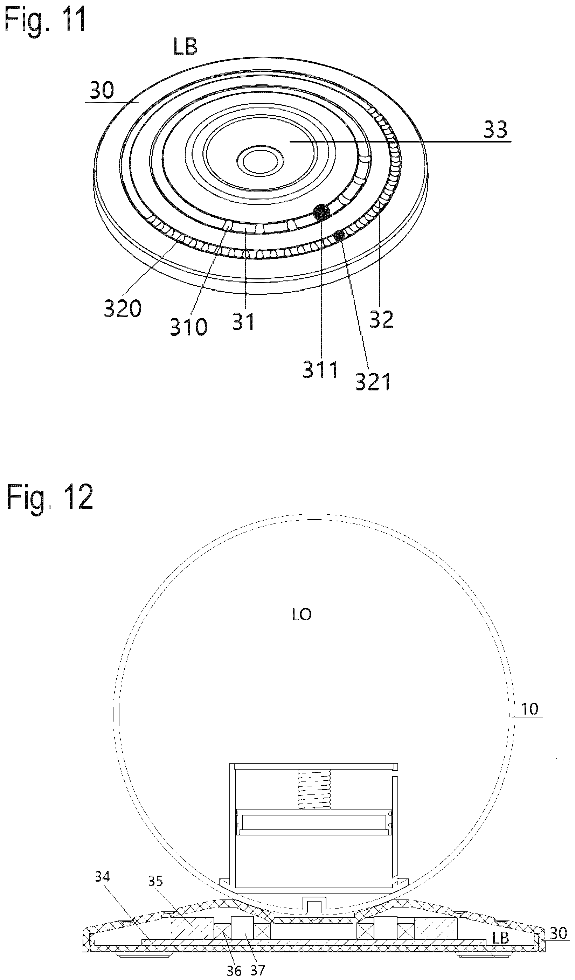

Figure 11 shows a base LB configured as a calendar base. The disc-shaped base LB shown has a housing 30 formed with a central circular receiving recess 33 around which a first indicator runner 31 and a second indicator runner 32 in the form of two concentric annular grooves radially spaced from each other are arranged on the upper surface of the housing 30. A first indicator bead 311 is operatively movably positioned at one of a plurality of setting positions 310 in the first indicator runner 311, and a second indicator bead 321 is operatively movably positioned at one of a plurality of setting positions 320 in the second indicator runner 32. The first indicator bead 311 and the second indicator bead 321 shown may be iron balls. Since the housing 30 further includes a ring magnet 35 located under the first indicator runner 31 and the second indicator runner 32 as described later, the iron ball in question can be quickly and readily positioned at the desired setting position of any indicator runner when it is moved or dialed along the indicator runner.

In the calendar base shown in Figure 11, except for where the receiving recess and the annular grooves are located, the height of the disc body of the shown base LB gradually decreases radially outward.

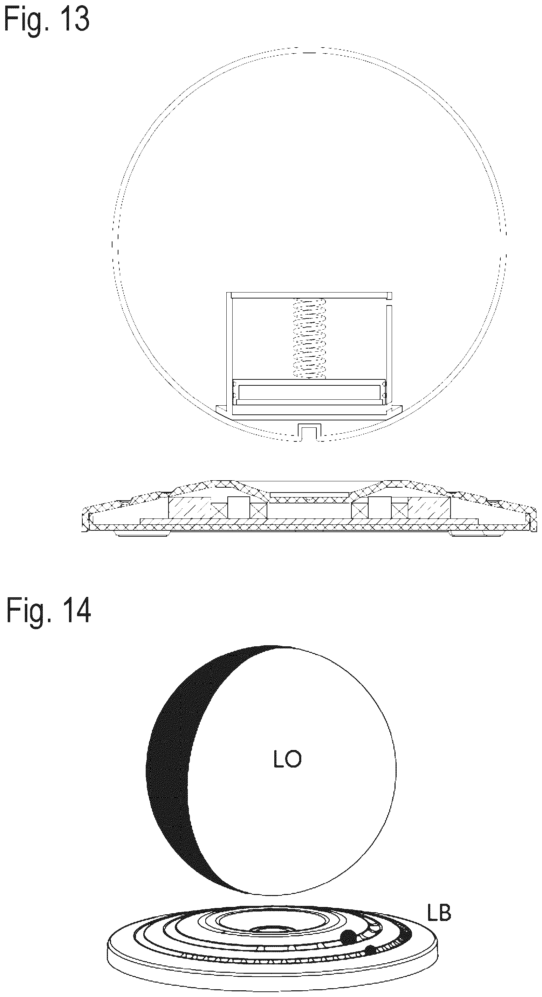

The embodiment shown in Figure 12 is similar to that shown in Figure 2, except for the calendar base LB shown in Figure 11. As shown in Figure 12, a magnetic levitation system is also provided in the housing 30 of the base LB, which includes a control circuit board 34, a ring magnet 35, electromagnetic coils 36, iron cores 37, etc. The levitating object LO can also rise from the position shown in Figure 12 to the position shown in Figure 13 as described above.

Figure 14 is a perspective view of the levitating body LO suspended above the calendar base LB shown in Figure 11, wherein the levitating body LO is in the form of a spherical moon-phase lamp. This spherical moon-phase lamp can form areas of inconsistent brightness on its spherical outer surface, such as a half dark area and a half lit-up area as shown in the figure. This spherical moon-phase lamp may have a spherical housing, one half transparent and the other half opaque or translucent, and a light source disposed inside the spherical housing.

Alternatively, this spherical moon-phase lamp can have a spherical housing formed by 3D-printing and a light source. The interior of the spherical moon-phase lamp is divided into two parts by a light barrier, and the light source is disposed in one of the two parts. Furthermore, the two parts inside the spherical moon-phase lamp separated by the light barrier can each have an independently controllable light source so as to result in either a half lit-up or a full lit-up state as needed.

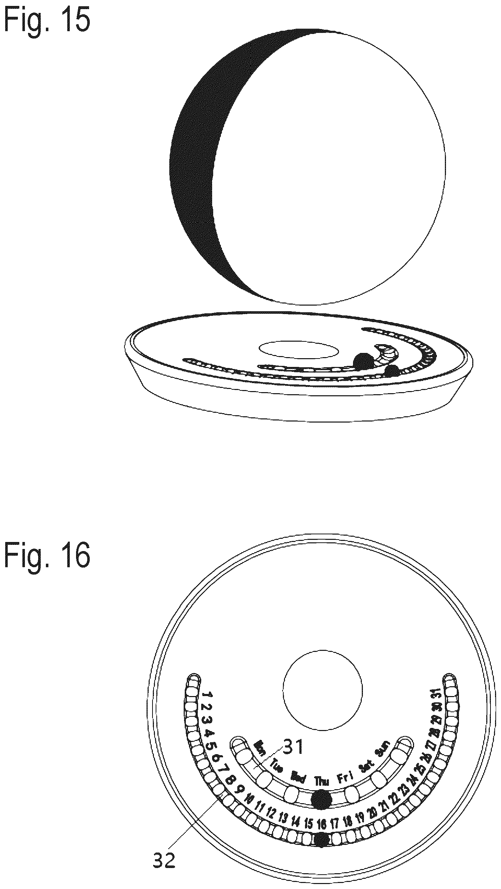

The embodiment shown in Figure 15 is similar to that shown in Figure 14, except for a generally flat calendar base.

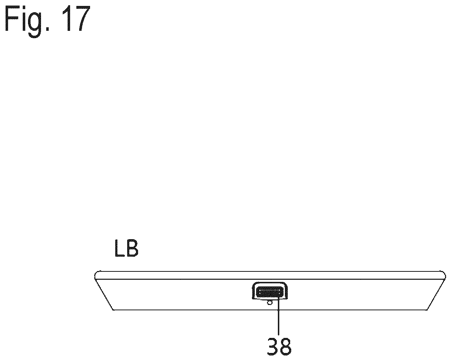

Figure 16 is a top view of the calendar base shown in Figure 15. The arc-shaped indicator runner 31 is further provided with corresponding weekly-date marks at its set positions, and the arc-shaped indicator runner 32 is further provided with corresponding monthly-date marks at its set positions. Figure 17 is a front view of the calendar base LB shown in Figure 16, with a charging port 38 provided thereon. In the embodiment shown in Figure 17, although not specifically shown, the base LB is further provided with a wireless charging transmitting device, and the spherical moon-phase lamp is further provided, corresponding to the wireless charging transmitting device of the base, with a wireless charging receiving device so that it can be wirelessly powered or charged. This magnetic levitation calendar device can with verisimilitude simulate the moon-phase changes, and give calendar indication conspicuously.

It will be appreciated by those skilled in the art that when a motor is used, other transmission mechanism variations are also possible. The linear guide mechanism is not limited to the above-mentioned thread or nut forms. For example, a pneumatically driven cylinder can also be used as the linear guide mechanism.

In addition, although not specifically shown, the levitating object may also be provided with electrical devices such as sound or lighting devices. In addition, the levitating object can also be equipped with wireless or wired charging devices to power the power-consuming devices within. For example, in the case of a wireless power supply, a wireless power supply receiving coil can be provided in the levitating object to cooperate with a wireless power supply transmitting coil provided in the base.

In addition, although not specifically shown, the levitating body of the present invention may further include a limiting mechanism for limiting the upper and/or lower movement limit of the relative movement of the magnetic member to the housing. For example, the motor can be provided with a travel switch so that it automatically stops running at a predetermined position.

It will be appreciated by those skilled in the art that the above illustrated embodiments are used only for a better understanding of the present invention, not for any limiting purpose. For example, the above directional terms are specific to the drawing figures. Further, the housing 10 of the levitating object LO of the present invention is not limited to such closed spherical housing configurations, and thus other configurations such as square boxes or any other suitable closed, semi-closed or open configurations can also be possible. Further, the housing 10 may be made of transparent, opaque or translucent materials. Furthermore, the magnetic member 20 or 20' of the present invention is not limited to being always contained within the housing 10, and can thus be upward or downward extended out of the housing 10 during movement.

## Claims

1. A levitating object for a magnetic levitation device, comprising a housing and a magnetic member, wherein the housing and the magnetic member are configured to be relatively movable, and the relative movement of the magnetic member to the housing is guided by a linear guide mechanism provided in the levitating object.

2. The levitating object according to claim 1, further comprising a motor providing driving force for the relative movement of the magnetic member to the housing.

3. The levitating object according to claim 2, further comprising a transmission mechanism that transmits the driving force of the motor to the magnetic member or to the housing.

4. The levitating object according to claim 1, further comprising a limiting mechanism for limiting the upper and/or lower movement limit of the relative movement of the magnetic member to the housing.

5. The levitating object according to claim 1, wherein the linear guide mechanism of the housing is a straight tube in which the magnetic member is provided.

6. The levitating object according to claim 5, wherein the magnetic member and the straight tube form a piston-cylinder type vacuuming mechanism.

7. The levitating object according to claim 5, wherein the straight tube is formed with a stop, and a compression spring is provided between the stop and the magnetic member.

8. The levitating object according to claim 1, wherein the housing is further provided with a positioning mark indicative of the linear motion direction of the linear motion mechanism or of the corresponding position of the magnetic member.

9. A magnetic levitation device includes a levitator and the levitating object according to any one of claims 1 to 8, wherein the levitating object is suspensible through the levitator.

10. The magnetic levitation device according to claim 9, wherein the levitator is in the form of a base, and the levitating object can be suspended above the base.

11. The magnetic levitation device according to claim 10, wherein the upper surface of the base is provided with a positioning center point or mark, and when the base is oriented horizontally, the magnetic member of the levitating object can be suspended directly above the positioning center point.

12. The magnetic levitation device according to claim 9, wherein the levitator is in the form of a hanger, and the levitating object can be suspended below the highest point of the hanger.

13. The magnetic levitation device according to claim 10, wherein the base is provided with at least one indicator runner and at least one indicator bead operatively movably positioned in the at least one indicator runner.

14. The magnetic levitation device according to claim 13, wherein the at least one indicator runner includes two annular indicator runners radially spaced apart from each other, one of which is formed with date marks, and the other is formed with weekly-date marks or month marks, and each of which is provided with a corresponding indicator bead.

15. The magnetic levitation device according to claim 14, wherein the levitating object is a spherical moon-phase lamp that can light up in one half and remain relatively dim in the other half.

16. A method of raising and lowering a levitating object using the magnetic levitation device of claim 11, comprising:
placing the levitator base basically horizontally;
placing the levitating object on the levitator base, and align the magnetic member of the levitating object with the positioning center point of the levitator base along the direction of the linear guide mechanism;
moving the magnetic member along the direction of the linear guide mechanism to the set suspension height so that it is in a stable suspension state relative to the levitator base; and
moving the housing of the levitating object, relative to the magnetic member, upward and thus away from the levitator base till to a desired height.

17. The method according to claim 16, further comprising:
move the housing of the levitating object, relative to the magnetic member, downward till to a desired height or in contact with the levitator base.

18. A method according to claim 16, wherein the relative movement of the housing of the levitating object to the magnetic member is performed by an electric drive mechanism.

19. The method according to claim 16, wherein the relative movement of the housing of the levitating object to the magnetic member is performed by a resilient restoration mechanism.

20. The method according to claim 19, wherein the resilient restoration mechanism is a piston-cylinder type vacuuming mechanism and/or a spring mechanism.
